# EUROPEAN PATENT SPECIFICATION

(11) **EP 2 324 944 B1**
(45) Date of publication and mention of the grant of the patent: **31.12.2014**
(21) Application number: 09815817.3
(22) Date of filing: 19.08.2009
(51) Int. Cl.: B23B 47/34, B23Q 11/00, B25D 17/18

(54) **ELECTRIC TOOL WITH DUST SUCTION FUNCTION**
ELEKTROWERKZEUG MIT STAUBABSAUGFUNKTION
OUTIL ÉLECTRIQUE AVEC FONCTION D'ASPIRATION DE POUSSIÈRE

(30) Priority: 25.09.2008 JP 2008246272
(43) Date of publication of application: 25.05.2011
(73) Proprietor: Makita Corporation, Anjo-shi, Aichi 446-8502 (JP)
(72) Inventor: KONISHI, Takuro, Anjo-shi Aichi 446-8502 (JP); MACHIDA, Yoshitaka, Anjo-shi Aichi 446-8502 (JP)
(74) Representative: Kramer Barske Schmidtchen Patentanwälte PartG mbB
(86) International application number: PCT/JP2009/003943
(87) International publication number: WO 2010/035395

(56) References cited:
- WO-A1-2006/031236
- GB-A- 989 278
- JP-A- 4 193 486
- JP-A- 4 223 869
- JP-A- 7 164 224
- JP-A- 7 164 224
- JP-A- 8 218 868
- JP-A- 2006 102 854
- JP-A- 2006 314 878
- JP-A- 2008 207 288

## Description

### TECHNICAL FIELD

The present invention relates to an electric tool with a dust suction function, such as an electric drill or hammer drill with a dust suction function, and also relates to a dust suction device for an electric tool which is used mounted to an electric tool not provided with a dust suction function.

### BACKGROUND ART

WO 2006/031236 A1 discloses a self-contained vacuum saw which picks up dust and debris from a circular saw during the operation of the saw.

A known type of electric tool with a dust suction function is an electric drill or the like provided with a dust suction function so as to suction powder dust generated by drilling and the like. For example, in Patent Document 1, a structure is described in which a dust suction device is mounted to a front portion of a housing of a rotary tool so as to give the rotary tool a dust suction function. The dust suction device includes a suction head, a suction tube (hose), a suction impeller (suction fan), and a separating device. In this case, an output shaft of a motor protruding from the housing of the rotary tool is coaxially disposed with and coupled to a shaft of the suction fan protruding from a housing of the dust suction device, whereby power for the dust suction device is supplied from the output shaft of the motor.

[Patent Document 1] Japanese Patent Application Publication No. JP-A-4-226850

### DISCLOSURE OF THE INVENTION

### Problem to be Solved by the Invention

In the electric tool with a dust suction function according to the related art, the suction fan rotates and stops in accordance with the output shaft of the motor. Therefore, when the motor is stopped after work is completed, the suction fan immediately stops in accordance with stopping of the output shaft. However, because there is a distance between the suction head and the separating device, powder dust suctioned from the suction head remains in the hose, and lowers dust suction efficiency.

In view of the foregoing problem, it is an object to provide an electric tool with a dust suction function and a dust suction device for an electric tool, both of which are capable of removing powder dust remaining in the hose and the like with a simple structure and achieving good dust suction efficiency.

### Means for Solving the Problem

In order to achieve the foregoing object, an electric tool according to claim 1 is provided.

An electric tool with a dust suction function includes: a motor; a suction fan for dust suction that rotates by means of rotation of an output shaft of the motor; and a one-way clutch that is provided between the output shaft and the suction fan, and transmits rotation to the suction fan by means of rotation of the output shaft and cuts off the transmission of rotation to the suction fan when the output shaft is decelerated or stopped so as to cause the suction fan to rotate by inertia.

It should be noted that the term "with a dust suction function" in the present teachings obviously includes an integrated type in which the suction fan and the like is built into the electric tool itself so as to provide the dust suction function, and also includes a case where, as described in Patent Document 1 above, a separate dust suction device with the built-in suction fan and the like is mounted to the electric tool.

Further, in order to secure a sufficient period of rotation of the suction fan by inertia, the suction fan may be made of a metal. Furthermore, the electric tool may be configured such that a front shaft to which rotation is transmitted from the output shaft, and a rear shaft that is coaxially disposed with the front shaft and to which the suction fan is fixed, are provided at a rear portion of the output shaft, the one-way clutch is disposed between the front shaft and the rear shaft, and the rear shaft is provided with a flywheel. According to a further aspect, a dust suction device for an electric tool, includes a main body that is mounted to the electric tool, a drive shaft that rotates by means of a motor of the electric tool, a suction fan for dust suction that rotates by means of rotation of the drive shaft, and a one-way clutch that is provided between the drive shaft and the suction fan, and transmits rotation to the suction fan by means of rotation of the drive shaft and cuts off the transmission of rotation to the suction fan when the drive shaft is decelerated or stopped so as to cause the suction fan to rotate by inertia.

### Effects

According to claim 1, it is possible to remove powder dust remaining in the hose and the like with a simple structure, thereby achieving good dust suction efficiency.

In particular, if the suction fan is made of a metal, it is possible to secure a sufficiently long period of rotation of the suction fan by inertia because the suction fan has a large mass.

Further, if the flywheel is provided on the rear shaft to which the suction fan is fixed, a longer period of rotation of the rear shaft and the suction fan by inertia can be secured.

### BEST MODES FOR CARRYING OUT THE INVENTION

Embodiments of the present teachings will be described below with reference to the drawings.

### First Embodiment

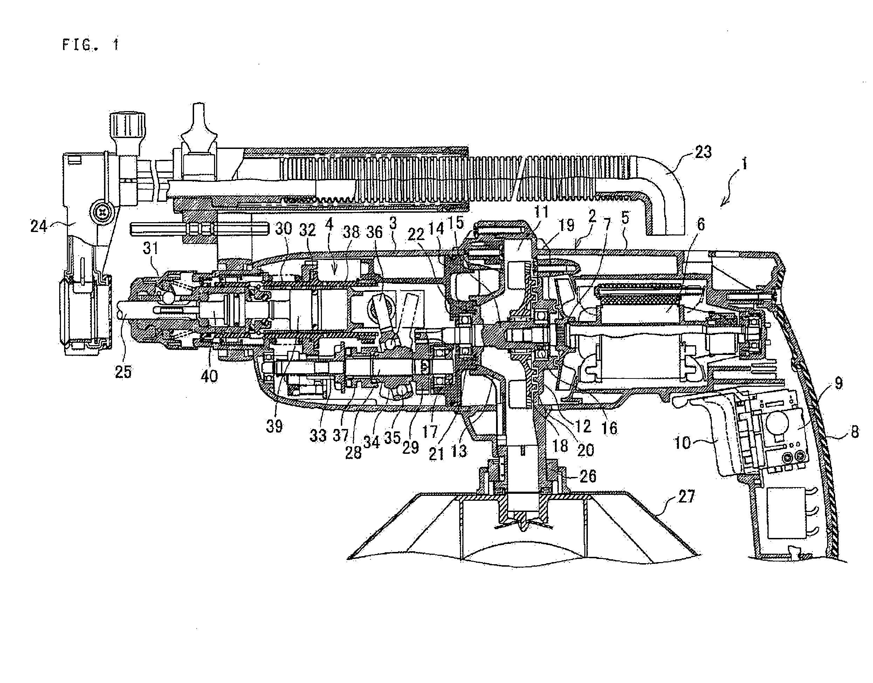

FIG. 1 is an explanatory diagram of a dust suction hammer drill as an example of an electric tool with a dust suction function.

A dust suction hammer drill 1 is formed in an inverted L shape (in a pistol-like shape) as a whole. A housing 2 of the dust suction hammer drill 1 is divided into a front housing 3 that accommodates a rotation/striking mechanism 4, and a rear housing 5 that accommodates a motor 6. The motor 6 is accommodated in the rear housing 5 with an output shaft 7 oriented forward (the left side of the drawing is defined as the front side). A handle 8 is formed on a rear end of the rear housing 5, and a switch 9 from which a trigger 10 protrudes forward is provided inside the handle 8.

A dust suction chamber 11 is formed between the front housing 3 and the rear housing 5. The dust suction chamber 11 is defined by a rear wall 12, a front wall 13, and an inner housing 14 so as to separate the dust suction chamber 11 from the front housing 3 and the rear housing 5. The rear wall 12 is provided in a front portion of the rear housing 5 and closes the motor 6 side of the rear housing 5. The front wall 13 is provided in a rear portion of the front housing 3 and closes the rotation/striking mechanism 4 side of the front housing 3. The inner housing 14 retains the rotation/striking mechanism 4. A fan shaft 15 is disposed in the dust suction chamber 11 between the rear wall 12 and the inner housing 14. The fan shaft 15 is axially supported via ball bearings 16, 17 coaxially with the output shaft 7. A distal end of the output shaft 7 is coupled by a square fitting to a rear end of the fan shaft 15 so as to be integrally rotatable therewith. A front end of the fan shaft 15 passes through the inner housing 14 and protrudes into the front housing 3.

A suction fan is denoted by reference numeral 18, made of a metal (for example, an aluminum), and externally fitted to the fan shaft 15. A one-way clutch 19 is disposed between the suction fan 18 and the fan shaft 15. The one-way clutch 19 has a known structure provided with a clutch pin (engagement member) to perform circumferential urging such that the suction fan 18 is linked to the fan shaft 15 to integrally rotate therewith when the fan shaft 15 takes on a normal rotation (when the output shaft 7 takes on a normal rotation by means of the motor 6), and transmission of rotation to the suction fan 18 is cut off when the fan shaft 15 is decelerated or stopped. Further, a labyrinth 20 is formed between opposing surfaces of the suction fan 18 and the rear wall 12 so as to prevent dust from entering the ball bearing 16. A dust prevention cap 21 is integrally fixed to a portion of the fan shaft 15 rearward of the ball bearing 17. The dust prevention cap 21 forms a labyrinth 22 with an opposing surface of the inner housing 14.

Meanwhile, a connection portion (not shown) of a flexible hose 23 is formed on a side surface of the dust suction chamber 11 so as to establish communication between the flexible hose 23 and the dust suction chamber 11. A dust suction head 24 is attached to a front end of the flexible hose 23 in an L-shaped manner such that a bit 25 attached to the distal end of the front housing 3 passes through the dust suction head 24. A connection cylinder 26 is provided protruding downward below the dust suction chamber 11, and a dust bag 27 is detachably attached to the connection cylinder 26.

In the rotation/striking mechanism 4 in the front housing 3, a first gear 29 provided at a rear end of an intermediate shaft 28 meshes with a distal-end pinion of the fan shaft 15, and the intermediate shaft 28 is axially supported parallel to the fan shaft 15. A cylindrical tool holder 30 has a front end to which the bit 25 can be inserted, and is axially supported parallel to the intermediate shaft 28 forward above the intermediate shaft 28. An operation sleeve 31 is externally fitted to a front portion of the tool holder 30 so as to lock the bit 25 inserted therein and cancel locking of the bit 25.

A second gear 33 is externally fitted to a front portion of the intermediate shaft 28 and meshes with a gear 32 provided on the tool holder 30. A boss sleeve 34 including an arm 36 is externally fitted to a rear portion of the intermediate shaft 28 via a swash bearing 35. A clutch 37 provided on the intermediate shaft 28 is operated to longitudinally slide from an outer portion of the front housing 3 by operating a switch tab (not shown) to select among a drill mode, a hammer mode, and a hammer drill mode. In the drill mode, the clutch 37 rotates only the second gear 33 to rotate the tool holder 30 and the bit 25. In the hammer mode, only the boss sleeve 34 is rotated to longitudinally move, via the arm 36, a piston cylinder 38 inserted into the tool holder 30. This movement causes a striker 39 accommodated in the piston cylinder 38 to strike the bit 25 via an impact bolt 40. In the hammer drill mode, the second gear 33 and the boss sleeve 34 are rotated together to rotate and strike the bit 25 at the same time.

In the dust suction hammer drill 1 thus configured, when the motor 6 is driven by pressing of the trigger 10, the fan shaft 15 rotates together with the output shaft 7, and the rotation is transmitted to the intermediate shaft 28 to rotate and/or strike the bit 25 in the selected operation mode.

When the suction fan 18 rotates by means of rotation of the fan shaft 15, outside air is suctioned from the dust suction head 24, and the suctioned air enters the dust suction chamber 11 through the flexible hose 23. The suctioned air then flows into the dust bag 27 from below the suction fan 18 via the connection cylinder 26, and is discharged to outside after passing through the dust bag 27. This airflow causes powder dust suctioned from the dust suction head 24 together with the outside air to enter the dust suction chamber 11 via the flexible hose 23, and to be discharged into and stored inside the dust bag 27.

When the pressing of the trigger 10 is canceled to stop the driving of the motor 6, the fan shaft 15 and the output shaft 7 are decelerated, and a speed difference is generated between the fan shaft 15 and the suction fan 18 that attempts to continue rotating by inertia. Namely, the fan shaft 15 takes on a reverse rotation relative to the suction fan 18. Because the one-way clutch 19 is provided between the suction fan 18 and the fan shaft 15 here, the suction fan 18 continues to rotate for several seconds despite the deceleration/stop of the fan shaft 15, and thus the suction fan 18 stops later. In particular, since the suction fan 18 is made of a metal, a sufficient rotation time is secured. Accordingly, a dust suction effect by the suction fan 18 continues even after the driving of the motor 6 is stopped, and powder dust in the dust suction head 24 and the flexible hose 23 can be reliably suctioned into the dust suction chamber 11 and caused to flow into the dust bag 27.

As described above, according to the dust suction hammer drill 1 of the first embodiment, the one-way clutch 19 is provided between the output shaft 7 and the suction fan 18. The one-way clutch 19 transmits rotation to the suction fan 18 by means of rotation of the output shaft 7, and cuts off the transmission of rotation to the suction fan 18 when the output shaft 7 is decelerated so as to cause the suction fan 18 to rotate by inertia. As a result, it becomes possible to remove powder dust remaining in the flexible hose 23 and the like with a simple structure, thereby achieving good dust suction efficiency.

In particular, in this embodiment, because the suction fan 18 is made of a metal, the suction fan 18 has a large mass, and thus a sufficiently long period of rotation of the suction fan 18 by inertia can be secured.

It should be noted that the one-way clutch is not limited to the above embodiment employing the engagement member. Other structures, such as a ratchet mechanism using engagement between a gear and a pawl, may be employed as long as rotation in only one direction is possible.

Further, in the first embodiment above, the output shaft of the motor and the fan shaft to which the suction fan is externally fitted are formed as separate coaxially coupled components. However, the output shaft may be extended, and the suction fan is externally fitted to the output shaft directly with the one-way clutch provided therebetween. Still further, even when the fan shaft is disposed parallel to or perpendicular to the output shaft and rotation is transmitted via a gear, the one-way clutch may be disposed between the fan shaft and the suction fan.

In addition, the present invention is not limited to the structure in which the one-way clutch is disposed between the suction fan and a shaft such as the fan shaft. A shaft such as the fan shaft may be divided into a front shaft and a rear shaft coaxially arranged, and the suction fan fixed to the rear shaft to dispose the one-way clutch between the front shaft and the rear shaft. Even in this structure, delayed stopping of the rear shaft and the suction fan is possible by decelerating or stopping the front shaft. In this case, if the rear shaft is provided with a flywheel, a larger period of rotation of the rear shaft and the suction fan by inertia can be secured. The flywheel may be provided by, for example, attaching a separate molded component to the rear shaft or integrally forming the flywheel using a material having a larger specific gravity than the rear shaft.

Meanwhile, according to the first embodiment, the dust suction function is added to the electric tool by integratedly incorporating the dust suction chamber into the housing. However, the present invention is not limited to this type of structure. The present invention may be applied to an electric tool to which the dust suction function is added by mounting a separate dust suction device as described in Patent Document 1 above. Such embodiments will be described below.

### Second Embodiment (not falling under the scope of the appended claims)

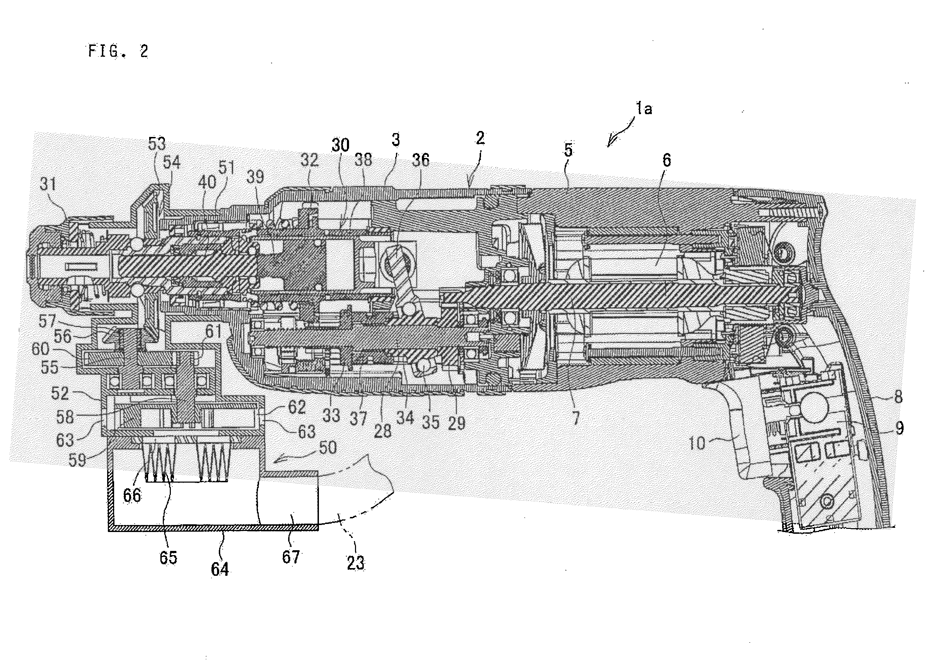

FIG. 2 is an explanatory diagram of a dust suction hammer drill 1a to which an attachment 50 that serves as the dust suction device is mounted. In this embodiment, the dust suction chamber is not formed between the front housing 3 and the rear housing 5, and the output shaft 7 of the motor 6 meshes with the first gear 29 of the intermediate shaft 28. Otherwise, the structure of the second embodiment is generally identical to that in FIG. 1. Thus, descriptions overlapping with those for as FIG. 1 will be omitted herein, and the attachment 50 will be mainly described.

The attachment 50 includes a cylindrical mounting portion 51 that is externally fitted to the tool holder 30, and a case (main body) 52 that is continuously provided from the bottom of the mounting portion 51. A first bevel gear 53, which serves as a drive shaft externally fitted to the tool holder 30 in an integrated manner, is provided in the mounting portion 51. The first bevel gear 53 is exposed to outside via an introduction portion 54 formed between the operation sleeve 31 of the dust suction hammer drill 1a and a front end portion of the front housing 3. The mounting portion 51 covers the exterior side of the first bevel gear 53, except for the case 52 side. A front end of the mounting portion 51 is inserted into the operation sleeve 31 with play therebetween so as to cover the introduction portion 54.

An upper end of an accelerating shaft 55 is provided with a second bevel gear 56 meshing with the first bevel gear 53. In the case 52, the accelerating shaft 55 is axially supported in a vertical direction, and a one-way clutch 57 is provided between the second bevel gear 56 and the accelerating shaft 55. A suction fan 59 is coupled to a lower end of a fan shaft 58, and the fan shaft 58 is axially supported parallel to the accelerating shaft 55. A large diameter gear 60 that is integrally provided with the accelerating shaft 55 meshes with a small diameter gear 61 that is integrally provided with an upper end of the fan shaft 58. The suction fan 59 is a centrifugal fan accommodated in an accommodating chamber 62 defined in the case 52. A plurality of exhaust ports 63, 63 ... is formed on an outer peripheral side of the suction fan 59 in the accommodating chamber 62. A dust suction chamber 64 is provided with a filter 65 at an upper end thereof, and disposed below the accommodating chamber 62. A communication hole 66 is formed in a lower wall of the accommodating chamber 62 so as to establish communication between the accommodating chamber 62 and the dust suction chamber 64 via the filter 65. Further, a cylindrical suction port 67 is provided protruding rearward from a lower portion of the dust suction chamber 64 such that the flexible hose 23 can be connected to the suction port 67.

With the attachment 50 thus configured mounted to the dust suction hammer drill 1a as shown in FIG. 2, when the motor 6 is driven by pressing of the trigger 10, the rotation of the output shaft 7 is transmitted to the intermediate shaft 28 to rotate and/or strike the bit in the selected operation mode.

Here, if the drill mode or the hammer drill mode is selected, the first bevel gear 53 also rotates because the rotation of the intermediate shaft 28 is transmitted to the tool holder 30 via the second gear 33 and the gear 32. The accelerating shaft 55 thus rotates via the second bevel gear 56, and this rotates the fan shaft 58 via the large diameter gear 60 and the small diameter gear 61.

When the suction fan 59 rotates by means of rotation of the fan shaft 58, outside air is suctioned from a dust suction head of the flexible hose 23, and enters the dust suction chamber 64 from the flexible hose 23 via the suction port 67. The suctioned air then reaches the accommodating chamber 62 after passing through the filter 65, and is discharged from the exhaust ports 63 to outside the case 52. This airflow causes powder dust suctioned from the dust suction head together with the outside air, to enter the dust suction chamber 64 from the flexible hose 23 via the suction port 67. The powder dust is captured by the filter 65 and stored in the dust suction chamber 64.

When the pressing of the trigger 10 is canceled to stop the driving of the motor 6, the second bevel gear 56 is decelerated through transmission from the tool holder 30 via the first bevel gear 53, and a speed difference is generated between the second bevel gear 56 and the accelerating shaft 55 that attempts to continue rotating by inertia. Namely, the accelerating shaft 55 takes on a reverse rotation relative to the second bevel gear 56. Because the one-way clutch 57 is provided between the second bevel gear 56 and the accelerating shaft 55, the accelerating shaft 55, the fan shaft 58, and the suction fan 59 continue to rotate for several seconds despite the deceleration/stop of the second bevel gear 56, and thus stop later. Accordingly, the dust suction effect by the suction fan 59 continues even after the driving of the motor 6 is stopped, and powder dust in the dust suction head and the flexible hose 23 can be reliably suctioned into the dust suction chamber 64.

As described above, according to the dust suction hammer drill 1a provided with the attachment 50 of the second embodiment, the one-way clutch 57 is provided between the second bevel gear 56 and the accelerating shaft 55, which are disposed between the first bevel gear 53 and the suction fan 59. The one-way clutch 57 transmits rotation to the suction fan 59 by means of rotation of the first bevel gear 53, and cuts off the transmission of rotation to the suction fan 59 when the first bevel gear 53 is decelerated so as to cause the suction fan 59 to rotate by inertia. As a result, it becomes possible to remove powder dust remaining in the flexible hose 23 and the like with a simple structure, thereby achieving good dust suction efficiency.

### Third Embodiment (not falling under the scope of the appended claims)

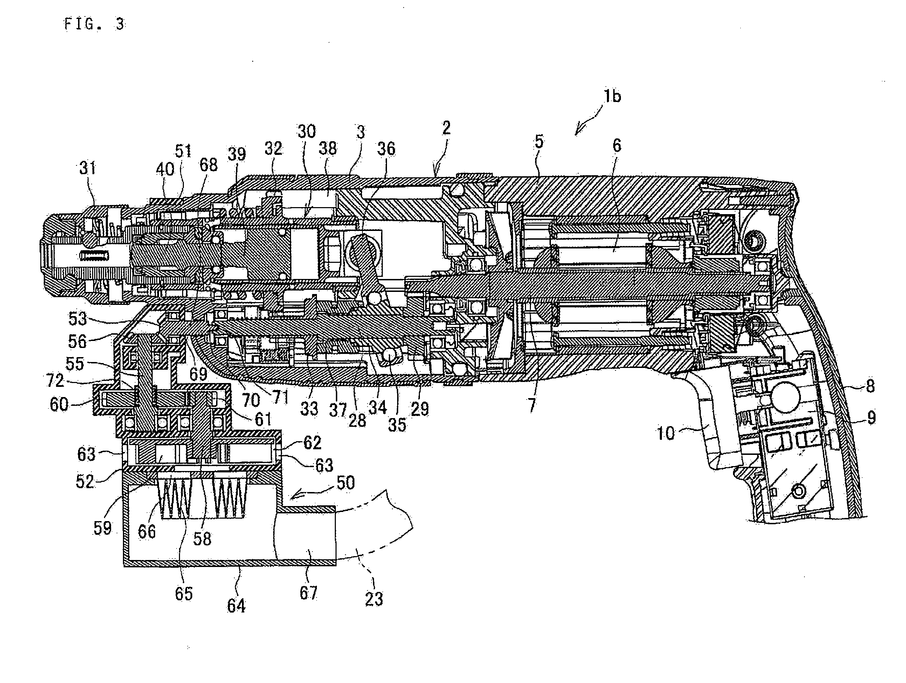

A dust suction hammer drill 1b shown in FIG. 3 differs from the embodiment shown in FIG. 2 in that the attachment 50 receives power from the intermediate shaft 28 instead of the tool holder 30. In this embodiment, the first bevel gear 53 is axially supported in the case 52, and a coaxially provided shaft portion 68 passes through the case 52 and protrudes rearward. Meanwhile, an introduction hole 69 is formed at a forward position on the intermediate shaft 28 in the front housing 3. With the attachment 50 mounted, the shaft portion 68 passes through the introduction hole 69 and protrudes into the front housing 3. A connection hole 71 is formed on a front end surface of the intermediate shaft 28 such that an coaxially protruding connection shaft 70 formed on a rear end surface of the shaft portion 68 is coupled to the intermediate shaft 28 by a square fitting. It should be noted that the mounting portion 51 is formed in a ring shape that is externally fitted to the front end portion of the front housing 3.

A one-way clutch 72 is provided between the accelerating shaft 55 and the large diameter gear 60 in this embodiment.

With the attachment 50 thus configured mounted to the front housing 3, the first bevel gear 53 is coaxially coupled to the intermediate shaft 28 such that the rotation of the intermediate shaft 28 is transmitted to the first bevel gear 53. Thus, when the motor 6 is driven to transmit the rotation of the output shaft 7 to the intermediate shaft 28 in this state, the first bevel gear 53 rotates together with the rotation of the intermediate shaft 28, and this rotates the accelerating shaft 55 via the second bevel gear 56. The fan shaft 58 is thus rotated via the large diameter gear 60 and the small diameter gear 61, and this rotates the suction fan 59, whereby the same dust suction effect as in FIG. 2 is achieved.

When the driving of the motor 6 is stopped, the accelerating shaft 55 is decelerated through transmission from the intermediate shaft 28 via the first bevel bear 53 and the second bevel gear 56, and a speed difference is generated between the accelerating shaft 55 and the large diameter gear 60 that attempts to continue rotating by inertia. Namely, the large diameter gear 60 takes on a reverse rotation relative to the accelerating shaft 55. In this embodiment, because the one-way clutch 72 is provided between the accelerating shaft 55 and the large diameter gear 60, the fan shaft 58 and the suction fan 59 disposed subsequent to the large diameter gear 60 continue to rotate for several seconds despite the deceleration/stop of the accelerating shaft 55, and thus stop later. Accordingly, the dust suction effect by the suction fan 59 continues even after the driving of the motor 6 is stopped, and powder dust in the dust suction head and the flexible hose 23 can be reliably suctioned into the dust suction chamber 64.

As described above, in the dust suction hammer drill 1b provided with the attachment 50 of the third embodiment, the one-way clutch 72 is provided between the accelerating shaft 55 and the large diameter gear 60, which are disposed between the first bevel gear 53 and the suction fan 59. The one-way clutch 72 transmits rotation to the suction fan 59 by means of rotation of the first bevel gear 53, and cuts off the transmission of rotation to the suction fan 59 when the first bevel gear 53 is decelerated so as to cause the suction fan 59 to rotate by inertia. As a result, it becomes possible to remove powder dust remaining in the flexible hose 23 and the like with a simple structure, thereby achieving good dust suction efficiency.

It should be noted that, in the second and third embodiments, the suction fan may be made of a metal, and the fan shaft may be provided with a flywheel. Further, a design change regarding the number and layout of the shafts and gears in an accelerating mechanism inside the attachment may be made as appropriate, and the suction fan, the filter, and the like are not limited to those described in the second and third embodiments. In addition, the case may be configured in a shape that follows the housing on the hammer drill side, the suction port may face forward or in a lateral direction, and the dust suction chamber may be detachably formed.

Moreover, in the second and third embodiments, the first bevel gear is coupled to the tool holder and the intermediate shaft. However, the first bevel gear may be coupled to another rearward output shaft.

Further, in all the embodiments described above, the motor may be a type that is accommodated with the output shaft thereof oriented in the vertical direction, or a type that includes an electric brake to immediately stop the motor. The present invention is obviously not limited to a hammer drill, and may be applied to other electric tools with a dust suction function, such as a drill or an oscillating drill.

### BRIEF DESCRIPTION OF THE DRAWINGS

[FIG. 1] FIG. 1 is an explanatory diagram of a dust suction hammer drill according to a first embodiment.
[FIG. 2] FIG. 2 is an explanatory diagram of a dust suction hammer drill according to a second embodiment not falling under the scope of the appended claims.
[FIG. 3] FIG. 3 is an explanatory diagram of a dust suction hammer drill according to a third embodiment not falling under the scope of the appended claims.

### DESCRIPTION OF THE REFERENCE NUMERALS

1, 1a, 1b: dust suction hammer drill; 2: housing; 3: front housing; 4: rotation/striking mechanism; 5: rear housing; 6: motor; 7: output shaft; 11, 64: dust suction chamber; 14: inner housing; 15, 58: fan shaft; 18, 59: suction fan; 19, 57, 72: one-way clutch; 23: flexible hose; 24: dust suction head; 25: bit; 28: intermediate shaft; 30: tool holder; 50: attachment; 51: mounting portion; 52: case; 53: first bevel gear; 55: accelerating shaft; 56: second bevel gear; 60: large diameter gear; 62: accommodating chamber; 65: filter; 67: suction port.

## Claims

1. An electric tool (1) with a dust suction function, comprising:
a motor (6);
a housing (2) accommodating the motor (6);
a suction fan (18) for dust suction rotating by means of rotation of the motor (6); and
a one-way clutch (19) that is provided between an output shaft (7) of the motor and the suction fan (18), wherein the one-way clutch (19) transmits rotation to the suction fan (18) by means of rotation of the output shaft (7), and cuts off the transmission of rotation to the suction fan (18) when the output shaft (7) is decelerated or stopped, so as to cause the suction fan (18) to rotate by inertia,
**characterized in that** the housing (2) is divided into a front housing (3) and a rear housing (5), and a dust suction chamber (11) is defined therebetween, and the suction fan (18) is provided on a fan shaft (15) axially supported in the dust suction chamber (11), and the rear housing (5) accommodates the motor (6).

2. The electric tool (1) with a dust suction function according to claim 1, wherein the dust suction chamber (11) is respectively connected with a hose (23) through which powder dust is suctioned, and a dust bag (27) storing the suctioned powder dust.

3. The electric tool (1) with a dust suction function according to claim 1 or 2, wherein the suction fan (18) is made of a metal.

## Patentansprüche

1. Elektrisches Werkzeug (1) mit einer Staubansaugfunktion, das aufweist:
einen Motor (6),
ein Gehäuse (2), das den Motor (6) aufnimmt,
ein Ansauglüfterrad (18) zum Staubansaugen, das mittels einer Drehung des Motors (6) dreht, und
einer Freilaufkupplung (19), die zwischen einer Ausgabewelle (7) des Motors und dem Ansauglüfterrad (18) vorgesehen ist, bei dem die Freilaufkupplung (19) die Drehung des Ansauglüfterrades (18) mittels einer Drehung der Ausgabewelle (7) überträgt, und die Übertragung der Drehung an das Ansauglüfterrad (18) unterbricht, wenn die Ausgabewelle (7) abgebremst oder gestoppt wird, um zu bewirken, dass das Ansauglüfterrad (18) durch Eigenträgheit dreht,
**dadurch gekennzeichnet, dass** das Gehäuse (2) in ein vorderes Gehäuse (3) und ein hinteres Gehäuse (5) geteilt ist, und eine Staubansaugkammer (11) dazwischen definiert ist, und das Ansauglüfterrad (18) an einer Lüfterradwelle (15) vorgesehen ist, die in der Staubansaugkammer (11) axial gelagert ist, und das hintere Gehäuse (5) den Motor (6) aufnimmt.

2. Elektrisches Werkzeug (1) mit einer Staubansaugfunktion nach Anspruch 1, bei dem die Staubansaugkammer (11) jeweils mit einem Schlauch (23), durch welchen Staub angesaugt wird, und einem Staubbeutel (27), der den angesaugten Staub speichert, verbunden ist.

3. Elektrisches Werkzeug (1) mit einer Staubansaugfunktion nach Anspruch 1 oder 2, bei dem das Ansauglüfterrad (18) aus Metall hergestellt ist.

## Revendications

1. Un outil électrique (1) avec une fonction d'aspiration de la poussière, comprenant :
un moteur (6) ;
un boitier (2) logeant le moteur (6) ;
un ventilateur d'aspiration (18) pour l'aspiration de la poussière en rotation au moyen d'une rotation du moteur (6) ; et
un embrayage unidirectionnel (19) qui est pourvu entre un arbre de sortie (7) du moteur et le ventilateur d'aspiration (18), dans lequel l'embrayage unidirectionnel (19) transmet une rotation au ventilateur d'aspiration (18) au moyen d'une rotation de l'arbre de sortie (7), et coupe la transmission de la rotation du ventilateur d'aspiration (18) quand l'arbre de sortie (7) est ralenti ou arrêté, de manière à provoquer une rotation du ventilateur d'aspiration (18) par inertie,
**caractérisé en ce que** le boitier (2) est divisé en un boitier avant (3) et un boitier arrière (5), et entre lesquels une chambre d'aspiration de la poussière (11) est délimitée, et le ventilateur d'aspiration (18) est pourvu sur un arbre de ventilateur (15) soutenu axialement dans la chambre d'aspiration de la poussière (11), et le boitier arrière (5) loge le moteur (6).

2. L'outil électrique (1) avec une fonction d'aspiration de la poussière selon la revendication 1, dans lequel la chambre d'aspiration de la poussière (11) est connectée respectivement connectée avec un tuyau (23) à travers lequel de la poussière poudreuse est aspirée, et un sac de poussière (27) emmagasinant la poussière poudreuse aspirée.

3. L'outil électrique (1) avec une fonction d'aspiration de la poussière selon l'une quelconque des revendications 1 ou 2, dans lequel le ventilateur d'aspiration (18) est fabriqué dans un métal.
